# EUROPÄISCHE PATENTSCHRIFT

(11) **EP 0 527 295 B1**
(45) Veröffentlichungstag und Bekanntmachung des Hinweises auf die Patenterteilung: **12.10.1994**
(21) Anmeldenummer: 92107354.0
(22) Anmeldetag: 30.04.1992
(51) Int. Cl.: F16F 9/06, F16F 5/00

(54) **Hydraulisch dämpfendes Gummilager**
Hydraulic dampening rubber mounting
Support en caoutchouc à amortissement hydraulique

(30) Priorität: 13.08.1991 DE 4126674
(43) Veröffentlichungstag der Anmeldung: 17.02.1993
(73) Patentinhaber: Firma Carl Freudenberg, 69469 Weinheim (DE)
(72) Erfinder: Axel, Rudolph, W-6140 Bensheim 3 (DE)

(56) Entgegenhaltungen:
- DE-A- 2 727 244
- DE-A- 3 145 446
- FR-A- 2 438 769
- US-A- 4 720 086
- US-A- 4 986 510
- US-A- 5 035 407
- US-A- 5 037 073

## Beschreibung

Die Erfindung betrifft ein hydraulisch dämpfendes Gummilager, bei dem zwei durch eine Dämpfungsöffnung verbundene, flüssigkeitsgefüllte Arbeitsräume vorgesehen sind, von denen gasgefüllte Hohlräume durch eine nachgiebige Kompensationswand abgetrennt sind.

Ein solches Gummilager ist aus der DE-OS 31 45 446 bekannt. Die luftgefüllten Hohlräume dienen hierbei dazu, bestimmte Dämpfungseffekte zu erzielen. Die anfängliche Federkraft zu verändern oder den Niveauausgleich eines Kraftfahrzeuges durchzuführen, in dem ein solches Gummilager angebracht ist.

Der Erfindung liegt die Aufgabe zugrunde, ein solches Gummilager derart weiterzuentwickeln, daß sich eine verbesserte Isolierung von akustisch störenden Schwingungen kleinerer Amplitude ergibt.

Diese Aufgabe wird erfindungsgemäß bei einem Gummilager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Gummilager ist es vorgesehen, daß die gasgefüllten Hohlräume, die vom Flüssigkeitsinhalt der Arbeitsräume durch eine nachgiebige Kompensationswand getrennt sind, untereinander durch eine Verbindungsöffnung verbunden sind. Im Ruhezustand des Gummilagers, d.h. zu einem Zeitpunkt, zu welchem keine Schwingungen eingeleitet werden, herrscht in den beiden Hohlräumen ein übereinstimmender Gasdruck, was den beiden Hohlräumen eine übereinstimmende Federrate verleiht. Diese erfährt bei einer Einleitung von akustisch störenden, hochfrequenten Schwingungen in das Gummilager keine merkliche Veränderung. Die Hohlräume sind daher in ausgezeichneter Weise geeignet, die sich bei Einleitung von entsprechenden Schwingungen in den Arbeitsräumen ergebenden Druckänderungen zu kompensieren. Sie werden dadurch nicht mehr auf das Fundament des Gummilagers übertragen.

Zur Funktion ist folgendes auszuführen:
Bei einem derart gestalteten Gummilager ändern die Arbeitsräume bei Einleitung von Schwingungen kleiner Amplituden in das Lager ihr Volumen. In diesem Fall wird der Hohlraum in der Kammer höheren Druckes verkleinert und das Gas strömt ohne nennenswerte Widerstände in den Hohlraum der Kammer niedrigeren Drucks. Dadurch wird vermieden, daß sich die Kammerwände aufblähen oder das Fluid durch die Dämpfungsöffnungen strömt. Durch diese Ausgestaltung wird ein Anstieg der dynamischen Federrate wirkungsvoll vermieden.

Die Hohlräume sind so gestaltet, daß bei größeren Anregungsamplituden das Gas aus dem Hohlraum in der Kammer höheren Druckes nahezu vollständig verdrängt wird und dann Fluid durch die Dämpfungsöffnung strömt. Dadurch ergibt sich eine ausgezeichnete Bedämpfung der eingeleiteten Schwingungen. Entsprechende Schwingungen können beispielsweise durch das Überfahren der Fahrbahnunebenheiten durch ein Kraftfahrzeug verursacht sein. Unter hochfrequenten Schwingungen im Sinne der vorstehenden Angaben sind demgegenüber Schwingungen zu verstehen, die sich beim bestimmungsgemäßen Betrieb einer Verbrennungskraftmaschine ergeben und von dieser selbst erzeugt werden.

Außerdem ist von hervorzuhebender Bedeutung, daß die nachgiebige Kompensationswand im Bereich ihrer Anschlagflächen eine Profilierung in Richtung des Federkörpers aufweisen kann, um Anschlaggeräusche zu vermeiden. Die gasgefüllten Hohlräume, die miteinander über eine Verbindungsöffnung verbunden sind, weisen außerdem eine Belüftungsöffnung auf, die beispielsweise durch eine Bohrung im äußeren Beschlagteil gebildet sein kann. Diese Belüftungsöffnung ist insbesondere dann vorteilhaft, wenn die Kompensationswand aus einem gummielastischen Werkstoff besteht. Vorteilhaft ist eine Belüftungsbohrung mit einem sehr kleinen Querschnitt, die nur eine quasistatische Verbindung zur umgebenden Atmopshäre ermöglicht, jedoch das dynamische Wechselspiel zwischen den Hohlräumen nahezu nicht beeinträchtigt. Eine Ausbildung der Kompensationswand beispielsweise aus Aluminiumfolie wäre ebenfalls denkbar. Aufgrund der absolut flüssigkeitsdichten Beschaffenheit der Aluminiumfolie könnte in diesem Fall auf eine Belüftungsöffnung verzichtet werden. Die Verbindungsöffnung kann als Dämpfungsöffnung ausgestaltet sein. Hierdurch lassen sich z.B. partielle höherfrequente Absenkungen der dynamischen Federrate erzielen.

Nach einer vorteilhaften Ausgestaltung ist es vorgesehen, daß mindestens eine Kompensationswand einem relativ beweglichen Bestandteil des Gummilagers in einem Abstand in Bewegungsrichtung vorgelagert ist. Hierbei ist von Vorteil, daß die Kompensationswände vor mechanischen Beanspruchungen weitesgehend geschützt sind, wodurch das Gummilager insgesamt eine hohe Gebrauchsdauer bei guten Gebrauchseigenschaften aufweist.

Die Hohlräume können durch ein einstückig ineinander übergehendes Formteil umschlossen sein. Sie lassen sich bei einer solchen Ausführung besonders einfach erzeugen und montieren. Als zweckmäßig hat es sich hierbei erwiesen, wenn das Formteil zumindest einen fingerartig ausgebildeten und in den Arbeitsraum vorspringenden Abschnitt aufweist, der mit seiner Basis an einem runden Bestandteil des Gummilagers festgelegt ist. Ein solches Formteil läßt sich beispielsweise durch ein an sich bekanntes Tauchverfahren kostengünstig erzeugen.

Die Erfindung wird nachfolgend anhand der Zeichnung weiter verdeutlicht. Es zeigen:
Figur 1 eine erste Ausführung des erfindungsgemäßen Gummilagers in quergeschnittener Darstellung.
Figur 2 eine zweite Ausführung des erfindungsgemäßen Gummilagers.

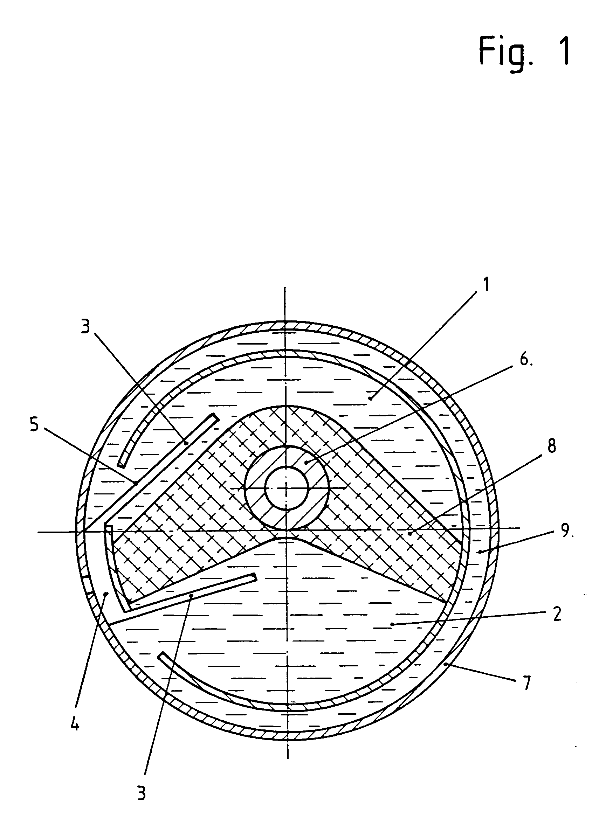

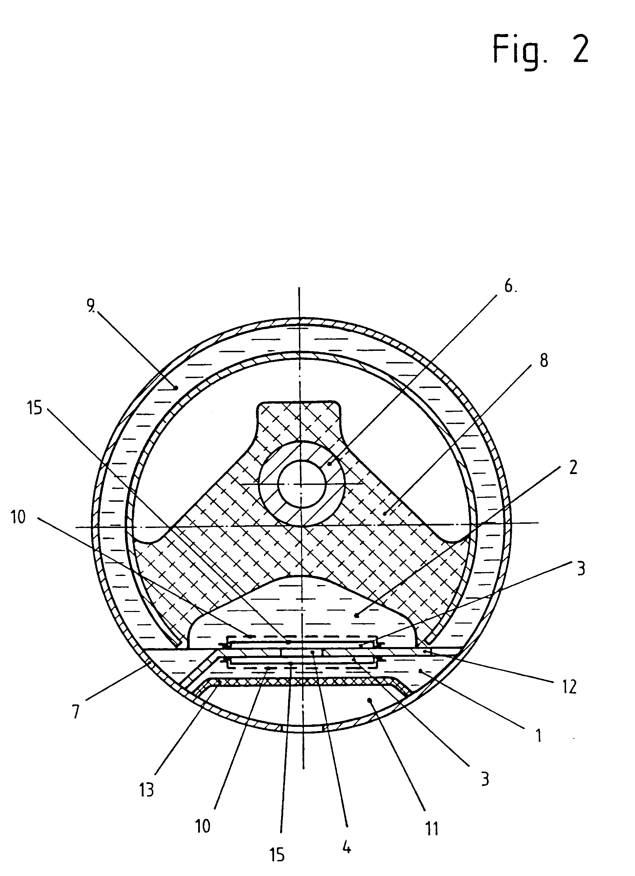

Das in den Figuren 1 und 2 gezeigte Gummilager ist als Buchsenlager gestaltet. Abweichend hiervon ist es jedoch problemlos möglich, die in der vorliegenden Erfindung offenbarte Lehre zum technischen Handeln auf andere Ausführungen zu übertragen, beispielsweise auf solche, die aus der DE-OS 27 27 244 bekannt sind.

Allen diesen Ausführungen ist gemeinsam, daß zwei dem Anschluß sekundärer Maschinenelemente dienende Beschlagteile 6, 7 vorgesehen sind, welche aus einem Hartwerkstoff bestehen, beispielsweise aus Metall, und welche durch einen elastisch verformbaren Federkörper 8 nachgiebig verbunden sind.

Bei den in den Figuren 1 und 2 gezeigten Ausführungen sind die beiden Beschlagteile 6, 7 rohrförmig gestaltet und umschließen einander in radialer Richtung. Sie sind durch einen aus Gummi bestehenden Federkörper 8 nachgiebig verbunden, wobei der Federkörper 8 zwei flüssigkeitsgefüllte Hohlräume 1, 2 aufweist, die durch eine Dämpfungsöffnung 9 verbunden sind. Bei Einleitung von tieffrequenten Schwingungen großer Amplituden, die bei einer Verwendung des Gummilagers in einem Kraftfahrzeug beispielsweise durch das Überfahren von Fahrbahnunebenheiten verursacht sein können, ergibt sich als Folge der Einfederung des Gummilagers eine Relativbewegung des Beschlagteils 6 in bezug auf das Beschlagteil 7. Die Folge hiervon ist eine abwechselnde Volumenverkleinerung und Volumenvergrößerung der flüssigkeitsgefüllten Arbeitsräume 1, 2, was die Hindurchpressung von Flüssigkeitsbestandteilen durch die Dämpfungsöffnung 9 in den jeweiligen Raum 1, 2 des momentan niedrigen Druckes bedingt. Die dabei in der Dämpfungsöffnung 9 resultierende Dämpfungswirkung wird zur Unterdrückung derartiger Schwingungen verwendet.

Bei der Ausführung nach Figur 1 ist in den beiden flüssigkeitsgefüllten Arbeitsräumen 1, 2 jeweils ein fingerartig ausgebildeter Abschnitt einer leicht verformbaren Kompensationswand 5 vorgesehen, wobei die Kompensationswand 5 als Formteil ausgebildet ist, einstückig ineinander übergeht und mit Gas gefüllt ist. Die beiden Abschnitte sind mit ihrer Basis an einem ruhenden Bestandteil des Gummilagers festgelegt, vorliegend an dem äußeren Beschlagteil 7. Ihre fingerartig in die beiden Arbeitsräume 1, 2 vorstehenden Abschnitte umschließen das Profil des Federkörpers 8 in Bewegungsrichtung beiderseits in einem Abstand. Bei Einleitung von hochfrequenten Schwingungen bewirken die resultierenden Druckänderungen in den Arbeitsräumen 1 und 2 eine abwechselnde Volumenverminderung der fingerartig ausgebildeten Abschnitte der Kompensationswand 5, wodurch die Schwingungen in ausgezeichneter Weise isoliert werden.

In diesem Beispiel ist es vorgesehen, daß beide dem Federkörper 8 zugewandter Kompensationswände von diesem mit Abstand benachbart angeordnet sind. Vorteilhafterweise ist der Abstand so bemessen, daß die Kompensationswände 5 während der normalen, bestimmungsgemäßen Verwendung, von dem Federkörper 8 nicht berührt werden können. Eine mechanische Beanspruchung der Kompensationswände 5 ist dadurch weitesgehend ausgeschlossen, wodurch gute Gebrauchseigenschaften während einer langen Gebrauchsdauer bedingt sind.

Die in Figur 2 gezeigte Ausführung ist ebenfalls als Buchsenlager gestaltet und hinsichtlich ihrer äußerlichen Ausbildung der vorstehend beschriebenen ähnlich. Abweichend ist der Volumeninhalt der beiden Arbeitsräume 1, 2 drastisch verringert. Zusätzlich ist der zweite Arbeitsraum 1 durch eine besonders leicht verformbare, membranartig ausgebildete Trennwand 13 von einem Pufferraum 11 getrennt, der durch eine großdimensionierte Verbindungsöffnung mit der Atmosphäre verbunden ist. Der Arbeitsraum 1 ist hierdurch zur drucklosen Aufnahme zusätzlicher Flüssigkeitsvolumina geeignet. Unabhängig vom jeweiligen Belastungszustand kann sich hierdurch in den beiden Arbeitsräumen, welche durch die Dämpfungsöffnung 9 verbunden sind, im statisch ruhenden Zustand nahezu kein Druckaufbau ergeben.

Die beiden mit einer hydraulischen Flüssigkeit gefüllten Arbeitsräume 1, 2 sind durch eine metallische Trennwand 12 voneinander getrennt. Diese ist im mittleren Bereich von einer Verbindungsöffnung 4 durchdrungen und begrenzt ihrerseits zwei gasgefüllte Hohlräume 3, die durch dünnwandige Membrane 15 von den Arbeitsräumen 1, 2 getrennt sind. Die beiden Membranen 15 sind zwischen beiderseitigen Anschlagflächen relativ verschiebbar angeordnet. Die eine Anschlagfläche wird durch die Trennwand 12 gebildet, die andere Anschlagfläche durch ein Lochsieb 10, welches unverformbar ausgebildet und an der Trennwand 12 unverrückbar festgelegt ist. Überlastungsbedingte Beschädigungen der Membranen 15 werden hierdurch zuverlässig vermieden.

Zur Funktion ist folgendes auszuführen:
Bei Einleitung von akustisch störenden, hochfrequenten Schwingungen resultiert lediglich eine abwechselnde Einfederung der Membranen 15, wodurch entsprechende Schwingungen nicht zum Auftreten eines Druckaufbaus im Inneren der Arbeitsräume 1, 2 führen können. Entsprechende Schwingungen werden dadurch in ausgezeichneter Weise isoliert.

Während dem gegenüber Schwingungen einer größeren Amplitude eingeleitet, so bedingen diese eine Hin- und Herverlagerung von Flüssigkeitsbestandteilen zwischen den Arbeitsräumen 1, 2 durch die Dämpfungsöffnung 9. Die Schwingungen werden hierdurch hochgradig gedämpft.

## Patentansprüche

1. Hydraulisch dämpfendes Gummilager, bei dem zwei durch eine Dämpfungsöffnung verbundene, flüssigkeitsgefüllte Arbeitsräume vorgesehen sind, von denen gasgefüllte Hohlräume durch eine nachgiebige Kompensationswand abgetrennt sind, dadurch gekennzeichnet, daß die Hohlräume (3) durch eine Verbindungsöffnung (4) verbunden sind.

2. Gummilager nach Anspruch 1 dadurch gekennzeichnet, daß mindestens eine Kompensationswand (5) einem relativ beweglichen Bestandteil des Gummilagers in einem Abstand in Bewegungsrichtung vorgelagert ist.

3. Gummilager nach Anspruch 1 bis 2, dadurch gekennzeichnet, daß die Hohlräume (3) durch ein einstückig ineinander übergehendes Formteil umschlossen sind.

4. Gummilager nach Anspruch 3, dadurch gekennzeichnet, daß das Formteil zumindest einen fingerartig ausgebildeten, in den Arbeitsraum (1,2) vorspringenden Abschnitt aufweist, der mit seiner Basis an einem ruhenden Bestandteil des Gummilagers festgelegt ist.

## Claims

1. A hydraulically damping rubber mount, in which two liquid-filled working spaces are provided, which are connected by a damping opening and from which gas-filled hollow spaces are separated off by a compliant compensation wall, characterized in that the hollow spaces (3) are connected by a connection opening (4).

2. A rubber mount according to claim 1, characterized in that at least one compensation wall (5) is mounted, with a clearance in the direction of movement, in front of a relatively movable component of the rubber mount.

3. A rubber mount according to either of claims 1 and 2, characterized in that the hollow spaces (3) are enclosed by a moulded part which merges together integrally.

4. A rubber mount according to claim 3, characterized in that the moulded part has at least one section which is designed in the manner of a finger, projects into the working space (1, 2) and is fixed with its base on a stationary component of the rubber mount.

## Revendications

1. Support en caoutchouc à amortissement hydraulique, dans lequel il est prévu deux chambres de travail remplies de liquide, reliées par une ouverture d'amortissement et dont les cavités remplies de gaz sont séparées par une paroi souple de compensation, caractérisé en ce que les cavités (3) sont reliées par une ouverture de liaison (4).

2. Support en caoutchouc selon la revendication 1, caractérisé en ce qu'au moins une paroi de compensation (5) est disposée, dans la direction de mouvement, avant et à une certaine distance d'un composant relativement mobile du support en caoutchouc.

3. Support en caoutchouc selon une des revendications 1 à 2, caractérisé en ce que les cavités (3) sont entourées par des parties profilées respectives se rejoignant mutuellement pour former une seule pièce.

4. Support en caoutchouc selon la revendication 3, caractérisé en ce que la pièce profilée comporte au moins une partie agencée en forme de doigt, faisant saillie dans la chambre de travail (1, 2) et qui est fixée par sa base sur un composant immobile du support en caoutchouc.
